(19) Europäisches Patentamt
European Patent Office
Office européen des brevets

(11) Veröffentlichungsnummer: **0 592 996 A2**

(12) # EUROPÄISCHE PATENTANMELDUNG

(21) Anmeldenummer: **93116463.6**

(22) Anmeldetag: **12.10.93**

(51) Int. Cl.5: **C08G 69/36**, C08L 77/00, C08G 69/26

(30) Priorität: **15.10.92 DE 4234710**

(43) Veröffentlichungstag der Anmeldung: **20.04.94 Patentblatt 94/16**

(84) Benannte Vertragsstaaten: **BE CH DE FR GB LI NL**

(71) Anmelder: **BASF Aktiengesellschaft**
**Carl-Bosch-Strasse 38**
**D-67063 Ludwigshafen(DE)**

(72) Erfinder: **Goetz, Walter, Dr.**
**Dhauner Strasse 79**
**D-67067 Ludwigshafen(DE)**
Erfinder: **Pipper, Gunter**
**Schlangenthaler Weg 10**
**D-67098 Bad Duerkheim(DE)**

(54) **Teilaromatische Copolyamide.**

(57) Thermoplastische Formmassen, enthaltend

A) 60 bis 100 Gew.-% eines teilaromatischen Copolyamids aufgebaut aus
  $A_1$) 50 bis 90 Gew.-% Einheiten, die sich von Terephthalsäure und Hexamethylendiamin ableiten,
  $A_2$) 5 bis 30 Gew.-% Einheiten, die sich von $\epsilon$-Caprolactam ableiten,
  $A_3$) 5 bis 30 Gew.-% Einheiten, die sich von Isophthalsäure und Hexamethylendiamin ableiten,
B) 0 bis 40 Gew.-% eines faser- oder teilchenförmigen Füllstoffes oder deren Mischungen,
C) 0 bis 30 Gew.-% eines kautschukelastischen Polymerisates,
D) 0 bis 30 Gew.-% übliche Zusatzstoffe und Verarbeitungshilfsmittel.

EP 0 592 996 A2

Die Erfindung betrifft Thermoplastische Formmassen, enthaltend

A) 60 bis 100 Gew.-% eines teilaromatischen Copolyamids aufgebaut aus

$A_1$) 50 bis 90 Gew.-% Einheiten, die sich von Terephthalsäure und Hexamethylendiamin ableiten,

$A_2$) 5 bis 30 Gew.-% Einheiten, die sich von $\epsilon$-Caprolactam ableiten,

$A_3$) 5 bis 30 Gew.-% Einheiten, die sich von Isophthalsäure und Hexamethylendiamin ableiten,

B) 0 bis 40 Gew.-% eines faser- oder teilchenförmigen Füllstoffes oder deren Mischungen,

C) 0 bis 30 Gew.-% eines kautschukelastischen Polymerisates,

D) 0 bis 30 Gew.-% übliche Zusatzstoffe und Verarbeitungshilfsmittel.

Darüber hinaus betrifft die Erfindung Verfahren zur Herstellung der thermoplastischen Formmassen, deren Verwendung sowie die hierbei erhältlichen Formkörper.

Teilaromatische Copolyamide mit geringem Triamingehalt sind aus der EP-A 327979 und der EP-A 299 444 bekannt. Im wesentlichen werden Zusammensetzungen binärer Art beschrieben, welche aus Einheiten Caprolactam/Hexamethylendiamin mit Terephthalsäure (Polyamid 6/6T) oder Einheiten aus Adipinsäure mit Hexamethylendiamin/Terephthalsäure mit Hexamethylendiamin (Polyamid 66/6T) aufgebaut sind.

Teilaromatische Copolyamide, welche Isophthalsäure als zusätzlichen Monomerbaustein enthalten, sind aus den EP-A 310752, EP-A 121984 und EP-A 291096 bekannt. Es werden binäre Zusammensetzungen aus Polyamid 66/6T bzw. 6I/6T und ternäre Copolyamide auf Basis 66/6I/6T offenbart.

Die bekannte Copolyamide zeichnen sich insbesondere durch ihre Hochtemperaturbeständigkeit aus, so daß Anwendungsgebiete für Polyamide möglich wurden, welche den wesentlich teureren Polyethersulfonen oder ähnlichen hochtemperaturbeständigen Polymeren vorbehalten waren.

Die Verarbeitung der bekannten Copolyamide ist jedoch nicht in allen Mengenzusammensetzungen problemlos möglich, da durch den hohen Schmelzpunkt nicht immer eine Verarbeitung ohne Zersetzung des Copolyamides erzielt werden kann.

Aufgabe der vorliegenden Erfindung war es daher, thermoplastische Formmassen zur Verfügung zu stellen, die ohne Zersetzung thermoplastisch verarbeitbar sind und bei gegebenem hohen Schmelzpunkt eine höhere Glasübergangstemperatur, höhere wärmeformbeständigkeit (vor allem unter Belastung) einen höheren Kristallinitätsgrad und eine geringere Neigung zur Wasseraufnahme aufweisen.

Demgemäß wurden die eingangs definierten Formmassen gefunden.

Bevorzugte Formmassen dieser Art und ihre Verwendung sind den Unteransprüchen zu entnehmen.

Als Komponente A) enthalten die erfindungsgemäßen thermoplastischen Formmassen 60 bis 100, vorzugsweise 60 bis 90 Gew.-% eines teilaromatischen Copolyamids aufgebaut aus

$A_1$) 50 bis 90 Gew.-% Einheiten, die sich von Terephthalsäure und Hexamethylendiamin ableiten,

$A_2$) 5 bis 30 Gew.-% Einheiten, die sich von $\epsilon$-Caprolactam ableiten,

$A_3$) 5 bis 30 Gew.-% Einheiten, die sich von Isophthalsäure und Hexamethylendiamin ableiten.

Die Komponente $A_1$) enthält 50 bis 90, vorzugsweise 60 bis 84 und insbesondere 65 bis 80 Gew.-%-Einheiten, die sich von Terephthalsäure und Hexamethylendiamin ableiten.

Der Anteil an Einheiten, die sich von $\epsilon$-Caprolactam ($A_2$) ableiten, beträgt 5 bis 30, vorzugsweise 8 bis 20 und insbesondere 10 bis 15 Gew.-%.

Der Anteil an Einheiten, die sich von Isophthalsäure und Hexamethylendiamin ableiten, beträgt 5 bis 30, vorzugsweise 8 bis 25 und insbesondere 10 bis 25 Gew.-%.

Neben den vorstehend beschriebenen Einheiten $A_1$) bis $A_3$) können die teilaromatischen Copolyamide bis zu 20, vorzugsweise bis zu 10 Gew.-% an weiteren polyamidbildenden Monomeren $A_4$) enthalten, wie sie von anderen Polyamiden bekannt sind.

Aromatische Dicarbonsäuren $A_4$) weisen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure und Phenoxyterephthalsäure.

Weitere polyamidbildende Monomere $A_4$) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, $\omega$-Aminoundecansäure und Laurinlactam als Vertreter von Lactamen bzw. Aminocarbonsäuren genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. USA 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 280 °C bis 330 °C, bevorzugt von 290 bis 315 °C, wobei dieser hohe Schmelzpunkt auch mit einer hohen Glasübergangstemperatur von in der Regel mehr als 100, insbesondere mehr als 120 °C (im trockenen Zustand) verbunden ist.

Bei den teilaromatischen Copolyamide sollen erfindungsgemäß solche verstanden werden, die einen Kristallinitätsgrad > 25 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von $\Delta H_{krist.}$ bestimmt.

Selbstverständlich können auch Mischungen der teilaromatischen Copolyamide umgesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 330 °C erhitzt, wobei ein Druck von 20 - 50, insbesondere 30 - 50 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemäß diesen Verfahren wird eine wäßrige Lösung der Monomeren $A_1$ bis $A_3$ mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330 °C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330 °C bei einer Verweilzeit von 5 - 30 min. polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 50 bis 100 ml/g, bevorzugt von 60 bis 80 ml/g, gemessen an einer 0,5 gew.-%igen Lösung in 96 %iger Schwefelsäure bei 25 °C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponente B) und gegebenenfalls C) und D) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240 °C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25 °C, liegt nach der Nachkondensation in fester Phase im allgemeinen im Bereich von 120 bis 500 ml/g,

vorzugsweise von 130 bis 200 ml/g.

Als weiteren Bestandteil können die erfindungsgemäßen Copolyamide 0 bis 40, vorzugsweise 10 bis 35, insbesondere 15 bis 35 Gew.% eines faser- oder teilchenförmigen Füllstoffes (Komponente (B)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Als Komponente (C) können die erfindungsgemäßen thermoplastischen Formmassen 0 bis 30, vorzugsweise 10 bis 20 und insbesondere 10 bis 15 Gew.-% eines kautschukelastischen Polymerisats enthalten. Bevorzugte kautschukelastische Polymerisate sind Polymerisate auf Basis von Olefinen, die aus folgenden Komponenten aufgebaut sind:

$C_1$) 40-100 Gew.-% mindestens eines $\alpha$-Olefins mit 2-8 C-Atomen

$C_2$) 0-50 Gew.-% eines Diens

$C_3$) 0-45 Gew.-% eines $C_1$-$C_{12}$-Alkylesters der Acrylsäure oder Methacrylsäure oder Mischungen derartiger Ester,

$C_4$) 0-40 Gew.-% einer ethylenisch ungesättigen Mono- oder Dicarbonsäure oder einem funktionellen Derivat einer solchen Säure

$C_5$) 0-40 Gew.-% eines Epoxygruppen enthaltenden Monomeren,

$C_6$) 0-5 Gew.-% sonstiger radikalisch polymerisierbaren Monomerer, mit der Maßgabe, daß die Komponente (C) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI + 4/100 °C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $C_2$) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von a-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $C_3$) an den Olefinpolymerisaten beträgt 0-60, vorzugsweise 10-50 und insbesondere 30-45 Gew.-%.

Anstelle der Ester $C_3$) oder zusätzlich zu diesen können in den Olefinpolymerisaten auch säurefunktionelle und/oder latent säurefunktionelle Monomere ethylenisch ungesättigter Mono- oder Dicarbonsäuren $C_4$) oder Epoxygruppen aufweisende Monomere $C_5$) enthalten sein.

Als Beispiele für Monomere $C_4$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut

$R^1C(COOR^2) = C(COOR^3)R^4$ (I)

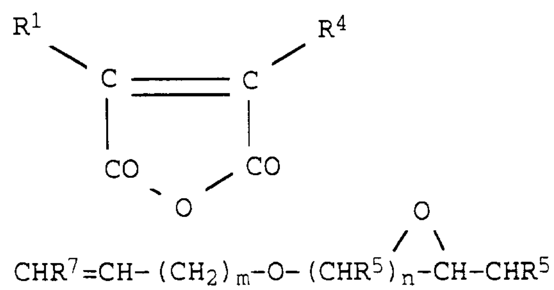

(II)

(III)

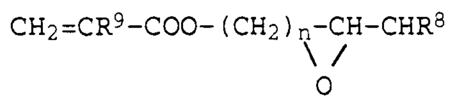

(IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, $C_4$) bzw. Alkenylglycidylether oder Vinylglycidylether $C_5$).

Bevorzugte Verbindungen der Formeln I, II, III und IV sind Maleinsäure und Maleinsäureanhydrid als Komponente $C_4$) und Epoxygruppen-enthaltende Ester der Acrylsäure und/oder Methacrylsäure, wobei Glycidylacrylat und Glycidylmethacrylat (als Komponente $C_5$) besonders bevorzugt werden.

Der Anteil der Komponenten $C_4$) bzw. $C_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus
50 bis 98,9 insbesondere 60 bis 95 Gew.% Ethylen,
0,1 bis 20, insbesondere 0,15 bis 15 Gew.% Glycidylacrylat und/oder Glycidylmethacrylat, Acrylsäure und/oder Maleinsäureanhydrid,
1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i-Butylester.

Als sonstige Monomere $C_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190 °C und 2,16 kg Belastung).

Außer den vorstehenden bevorzugten kautschukelastischen Polymerisaten auf Basis von Olefinen eignen sich als Elastomere (C) beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (C) bis zu 5 Gew.%, vorzugsweise nicht mehr als 3 Gew.%, bezogen auf (C).

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere (C) können auch nach anderen üblichen Verfahren, z.B. durch Suspensionspolymerisation, hergestellt werden.

Neben der wesentlichen Komponente A) sowie gegebenenfalls B) und C) können die erfindungsgemäßen Formmassen übliche Zusatzstoffe und Verarbeitungshilfsmittel D) enthalten. Deren Anteil beträgt im allgemeinen bis zu 30, vorzugsweise bis zu 15 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß ($2\ PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythritsmit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen bei Anwesenheit der Komponenten B) - D) können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch höhere Wärmeformbeständigkeit, geringe Wasseraufnahme, hohe Schmelzpunkte bei gleichzeitig hoher Glasübergangstemperatur und hohem Kristallisationsgrad aus. Insbesondere lassen sie sich problemlos thermoplastisch verarbeiten und eignen sich demgemäß zur Herstellung von Fasern, Folien und Formkörpern.

Beispiele 1 - 6

Eine 60 %ige wäßrige Lösung, bestehend aus Terephthalsäure, Isophthalsäure, Hexamethylendiamin bzw. Caprolactam wurde in den in der Tabelle angegebenen Mengenverhältnissen aus einem beheizten Vorratsbehälter bei ca. 80 °C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 328 °C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 320 °C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152 °C ein. Der nach dem Entspannungsventil austretende Wasserdampf wurde kondensiert und hatte einen Gehalt an Hexamethylendiamin von weniger als 0,05 Gew.-% und einen Gehalt an $\epsilon$-Caprolactam von weniger als 0,1 Gew.-%. Als Kolonnensumpf erhielt man eine wäßrige Lösung von Hexamethylendiamin, die 80 Gew.-% Hexamethylendiamin und 1 bis 3 % $\epsilon$-Caprolactam, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine relative Viskositätszahl von 82 - 95 ml/g (gemessen als 0,5 %ige Lösung in 96 gew.%iger $H_2SO_4$).

Das Produkt wies in etwa eine Äquivalenz von Carboxyl- und Aminoendgruppen auf.

Im Austragsextruder wurde die Schmelze dann auf Normaldruck entspannt und bei einer Verweilzeit von weniger als 1 Minute praktisch nicht mehr weiter kondensiert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 180 °C diskontinuierlich auf eine Viskositätszahl von 120 - 125 ml/g getempert. Die Verweilzeit betrug 6 - 12 h. Im Verlauf dieser Temperung wurde gegebenenfalls auch ein Großteil der extrahierbaren Restomonomere (z.B. $\epsilon$-Caprolactam) vom Wasserdampf extrahiert.

Beispiele 7 - 18

In einem 5 l Laborautoklaven wurden 2 kg Terephthalsäure, Isophthalsäure, Adipinsäure, Hexamethylendiamin bzw. Caprolactam in den Mengenverhältnissen, die die in der Tabelle aufgeführten Polymeren ergaben, mit 700 ml Wasser vorgelegt. Die Mischung war in 5 Glasröhren zu je 800 ml Inhalt verteilt. Der Autoklav wurde 1 h auf 350 °C aufgeheizt, wobei der resultierende Wasserdampfdruck nach Erreichen von 20 bar durch Entspannen überschüssigen Wassers konstant gehalten wurde. Danach wurden Temperatur und Druck noch 1 h konstant gehalten. Anschließend wurde auf 330 °C abgekühlt und der Autoklav auf Normaldruck entspannt. Die Heizung des Autoklaven wurde abgeschaltet, wobei nach ca. 3 h Raumtemperatur erreicht war.

Die Glasröhren wurden aus dem Autoklaven entnommen und deren Inhalt gemahlen. Die Produkte wiesen eine VZ von 160 - 210 ml/g auf. Lediglich Versuch 7 war nicht gelfrei löslich, so daß keine VZ ermittelt werden konnte.

Folgende Prüfungen wurden durchgeführt:
Schmelzpunkt $T_m$, Glasübergangstemperatur $T_G$ und spezifische Schmelzwärme $\Delta H_{krist.}$ (als relatives Maß für den Kristallinitätsgrad) wurden per Differential Scanning Kalorimetrie (DSC 5000 der Firma Mettler) bei 20 °C/min Aufheizrate bestimmt. Die Wasseraufnahme wurde an gepressten Rundscheiben 60 x 2 mm durch Lagerung in Wasser bei 50 °C/4 Tage bestimmt.

Anschließend wurde 1 kg des Polymeren auf einem Zweiwellenextruder (ZSK 25 von Werner + Pfleiderer) bei 325 °C (Beispiele 5, 10, 11: 335 °C) mit 30 % Glasfasern (Schnittglas, 10 µm Faserdurchmesser, 4,5 mm Faserlänge, Aminosilan-Schlichte) konfektioniert. Bei den Beispielen 7, 8, 9, 12, 13 war bis 340 °C keine Konfektionierung ohne Zersetzung des Polymeren möglich.

Diese Produkte wurden zu Flachstäben 100 x 10 x 3,2 mm verspritzt und daran die Wärmeformbeständigkeit nach 150 75 A + B gemessen.

Die Zusammensetzungen der Formmassen und die Ergebnisse der Messungen sind der Tabelle zu entnehmen.

Tabelle

| | $A_1$ 6T [Gew.-%] | $A_2$ 6 | $A_3$ 6I | 66 | $T_m$ [°C] | $T_G$ [°C] | ISO A [°C] | ISO B [°C] | $H_2O$ [%] | $\Delta H_{krist}$ [J/g] |
|---|---|---|---|---|---|---|---|---|---|---|
| 1V | 70 | 30 | | | 198 | 113 | 134 | 284 | 3.8 | 45 |
| 2 | 70 | 25 | 5 | | 296 | 116 | 240 | 286 | 3.6 | 46 |
| 3 | 70 | 20 | 10 | | 293 | 120 | 242 | 286 | 3.5 | 50 |
| 4 | 70 | 10 | 20 | | 304 | 124 | 254 | 289 | 3.5 | 48 |
| 5 | 70 | 5 | 25 | | 309 | 130 | 260 | 294 | 3.3 | 48 |
| 6V | 70 | | 30 | | 329 | 133 | 260 | 305 | 3.5 | 40 |
| 7V[3)] | 70 | | 10 | 20 | 344 | 109 | 1) | 1) | 4 | 54 |
| 8V | 70 | 10 | | 20 | 332 | 112 | 1) | 1) | 4.2 | 52 |
| 9V | 70 | | | 30 | 340 | 98 | 1) | 2) | 4 | 54 |
| 10 | 80 | 10 | 10 | | 317 | 128 | 274 | 301 | 2.9 | 65 |
| 11 | 80 | 5 | 15 | | 319 | 131 | 280 | 301 | 2.7 | 70 |
| 12V[3)] | 80 | | 10 | 10 | 348 | 125 | 1) | 1) | 3.5 | 65 |

1) nicht verarbeitbar, Schmelzpunkt zu hoch

2) kein Schmelzpunkt im DSC

3) Vergleichsbeispiel gemäß EP-A 121 984 und EP-A 291 096

| | $A_1$ 6T [Gew.-%] | $A_2$ 6 | $A_3$ 6I | 66 | $T_m$ [°C] | $T_G$ [°C] | ISO A [°C] | ISO B [°C] | $H_2O$ [%] | $\Delta H_{krist}$ [J/g] |
|---|---|---|---|---|---|---|---|---|---|---|
| 13V | 80 | 10 | | 10 | 329 | 125 | 1) | 1) | 3.3 | 72 |
| 14 | 60 | 20 | 20 | | 261 | 114 | 202 | 232 | 4.4 | 24 |
| 15 | 60 | 10 | 30 | | 268 | 121 | 209 | 234 | 4.2 | 26 |
| 16V | 40 | 30 | 30 | | 2) | 111 | 109 | 115 | 4.8 | - |
| 17V | 20 | 40 | 40 | | 2) | 101 | 101 | 105 | 4.8 | - |
| 18V | 40 | 30 | | 30 | 2) | 78 | 80 | 88 | 4.6 | - |
| 19V | 20 | 40 | | 40 | 2) | 68 | 72 | 77 | 4.9 | - |

1) nicht verarbeitbar, Schmelzpunkt zu hoch

2) kein Schmelzpunkt im DSC

3) Vergleichsbeispiel gemäß EP-A 121 984 und EP-A 291 096

## Patentansprüche

**1.** Thermoplastische Formmassen, enthaltend

A) 60 bis 100 Gew.-% eines teilaromatischen Copolyamids aufgebaut aus

$A_1$) 50 bis 90 Gew.-% Einheiten, die sich von Terephthalsäure und Hexamethylendiamin ableiten,

$A_2$) 5 bis 30 Gew.-% Einheiten, die sich von $\epsilon$-Caprolactam ableiten,

$A_3$) 5 bis 30 Gew.-% Einheiten, die sich von Isophthalsäure und Hexamethylendiamin ableiten,
B) 0 bis 40 Gew.-% eines faser- oder teilchenförmigen Füllstoffes oder deren Mischungen,
C) 0 bis 30 Gew.-% eines kautschukelastischen Polymerisates,
D) 0 bis 30 Gew.-% übliche Zusatzstoffe und Verarbeitungshilfsmittel.

**2.** Thermoplastische Formmassen nach Anspruch 1, enthaltend
A) 60 bis 90 Gew.-%
B) 10 bis 35 Gew.-%

**3.** Thermoplastische Formmassen nach den Ansprüchen 1 bis 2, in denen die Komponente A aufgebaut ist aus
$A_1$) 60 bis 84 Gew.-% Einheiten, die sich von Terephthalsäure und Hexamethylendiamin ableiten,
$A_2$) 8 bis 20 Gew.-% Einheiten, die sich von $\epsilon$-Caprolactam ableiten
$A_3$) 8 bis 25 Gew.-% Einheiten, die sich von Isophthalsäure und Hexamethylendiamin ableiten.

**4.** Thermoplastische Formmassen nach den Ansprüchen 1 bis 3, in denen die Komponente A) einen Kristallinitätsgrad > 25 % aufweist.

**5.** Verfahren zur Herstellung der thermoplastischen Formmassen gemäß den Ansprüchen 1 und 3, dadurch gekennzeichnet, daß man wäßrige Lösungen der Monomeren $A_1$) bis $A_3$) in üblicher Weise kontinuierlich polykondensiert, so daß das entstehende präpolymere Copolyamid A) eine Viskositätszahl von 50 - 100 ml/g aufweist und anschließend das Präpolymer einer Nachkondensation in fester Phase unterwirft.

**6.** Verfahren nach Anspruch 5, dadurch gekennzeichnet, daß das Copolyamid nach der Nachkondensation in fester Phase eine Viskositätszahl von mindestens 120 ml/g aufweist.

**7.** Verwendung von thermoplastischen Formmassen gemäß den Ansprüchen 1 bis 4 zur Herstellung von Fasern, Folien und Formkörpern.

**8.** Formkörper erhältlich aus thermoplastischen Formmassen gemäß den Ansprüchen 1 bis 4.